(19) Europäisches Patentamt
European Patent Office
Office européen des brevets

(11) EP 1 211 049 B1

(12) # EUROPEAN PATENT SPECIFICATION

(45) Date of publication and mention of the grant of the patent:
**26.01.2011 Bulletin 2011/04**

(51) Int Cl.:
***B29C 47/12*** *(2006.01)* ***B29D 30/62*** *(2006.01)*

(21) Application number: **01309772.0**

(22) Date of filing: **21.11.2001**

(54) **Method and apparatus for rubber extrusion**

Verfahren und Vorrichtung zum Strangpressen von Kautschuk

Procédé et dispositif pour l'extrusion de caoutchouc

(84) Designated Contracting States:
**DE FR GB IT**

(30) Priority: **22.11.2000 JP 2000355991**

(43) Date of publication of application:
**05.06.2002 Bulletin 2002/23**

(73) Proprietor: **Sumitomo Rubber Industries, Ltd.**
**Kobe-shi,**
**Hyogo-ken (JP)**

(72) Inventor: **Ohki, Masahiko,**
**c/o Sumitomo Rubber Industries Ltd**
**Kobe-shi,**
**Hyogo-ken (JP)**

(74) Representative: **Manitz, Finsterwald & Partner GbR**
**Postfach 31 02 20**
**80102 München (DE)**

(56) References cited:
**EP-A- 0 733 457** **EP-A- 0 835 735**
**WO-A-99/38664** **US-A- 2 566 854**
**US-A- 4 439 125** **US-A- 4 515 738**
**US-A- 4 556 382** **US-A- 4 609 336**

- **HUREZ P ET AL: "A NEW DESIGN PROCEDURE FOR PROFILE EXTRUSION DIES" POLYMER ENGINEERING & SCIENCE, SOCIETY OF PLASTICS ENGINEERS, US, vol. 36, no. 5, 15 March 1996 (1996-03-15), pages 626-635, XP000594967 ISSN: 0032-3888**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 211 049 B1

**Description**

BACKGROUND OF THE INVENTION

The present invention relates to a rubber extruding method and a rubber extruding apparatus, capable of performing extruding of a rubber extruded component having a thickness varying in its width direction with good precision.

Where a raw tyre (green tyre) is produced, for example, rubber extruded components such as a sidewall rubber, a clinch rubber, a tread rubber and others are employed. Such rubber extruded components are extruded from a rubber extruder having a die plate. In Fig. 10(A), a tread rubber "a" is illustrated. In general, such extruded components "a" are each extruded having a thickness varying in the width direction.

In extrusion, rubber flows more easily in a portion a1 having a larger thickness than in a portion a2 having a smaller thickness therein. For this reason, a distribution vp of an extruding speed v, as shown in Fig. 10A, has a profile of different values similar to the sectional shape of the rubber extruded component. That is, the extruding speed v is non-uniform in the width direction. Furthermore, if the extruding rate of the extruder varies, the extruding speed distribution vp loses more of its balance this increasing non-uniformity in extruding speed. In such a case, there arises a problem that the passage resistance to the rubber passing through the die plate varies greatly at positions along the width direction, thereby causing the resultant sectional shape of the rubber component to vary.

A method and an apparatus according to the pre-characterising portion of claims 1 and 6 respectively, are known from US-A-2 566 854, US-A-4 515 738, US-A-4 609336, EP-A-733 457 and US-A-4 556 382.

SUMMARY OF THE INVENTION

The present invention has been contrived in light of the problems as described above and it is an object of the present invention to provide a rubber extruding method and a rubber extruding apparatus, working to maintain constant the sectional shape of a rubber component even in a case where the extruding rate of the extruder or the like varies.

This object is achieved by a method according to claim 1 and by an apparatus according to claim 5.

BRIEF DESCRIPTION OF THE DRAWINGS

An embodiment of the present invention will now be described, by way of example only, in detail in conjunction with the accompanying drawings in which:

Fig. 1 is a perspective view showing extruding apparatus according to the present invention;
Figs. 2A to 2E are diagrams showing accumulation states in an accumulator;
Fig. 3 is a sectional view describing a flow path in an extrusion head;
Fig. 4 is an exploded, perspective view showing a rubber flow path, divided into two parts, one on the other, in a die plate;
Fig. 5 is an exploded, perspective view showing an intermediate flow path, divided into two parts, one on the other, in a preformer;
Fig. 6 is a diagram showing a discharge port and inflow port of the die plate together as viewed from the front side;
Figs. 7A and 7B are a descriptive diagram of a die plate for use in a test and a graph showing test results, respectively;
Fig. 8 is diagrams showing variations in shape of inlets and outlets of respective various flow paths in the order in which rubber flows through the inlets and outlets;
Fig. 9 is a diagram showing illustrating the other of the geometrical relationship between a receiving port of the preformer and a discharge port of the die plate; and
Fig. 10A is a diagram showing an extruding speed distribution in a prior art practice and Fig. 10B is a diagram showing an extruding speed distribution in the present invention.

DESCRIPTION OF THE PREFERRED EMBODIMENTS

In Fig. 1, a rubber extruding apparatus 1 is applied in a tyre tread ring production line. In this tread ring production line, after a tread rubber is extruded as a rubber extruded intermediate or component G, the component G is further formed into a tyre preform such as a tread ring by directly fixing the component G onto a forming drum.

The rubber extruding apparatus 1 comprises an extruder 2 and a feed means 4. The feed means 4 feeds the rubber extruded component or intermediate G continuously extruded from the extruder 2 to a tyre forming drum 3 to form an annular tread ring. The feed means 4 is constituted of, for example, an accumulator 5, a fixing conveyor 6 and a cutting device 7. The drum 3 can reciprocate in the axial direction thereof in this example and shows a so-called belt drum which can provide for applying parts such as a belt and a band at another position to form a tread and breaker package.

The accumulator 5 has an accumulation part 9 drooping the extruded component G from the extruder 2 in a "U" shape for temporary accumulation. The extruder 2 is controlled in its screw rotation spaced according to the amount of the component in the accumulation part 9. In Figs. 2A to 2(E), variations in accumulation amount are shown.

The fixing conveyor 6 is constituted of a first conveyor portion 6A receiving the rubber extruded component G from the accumulator 5 for transportation, and a second conveyor portion 6B provided to the first conveyor 6A for free transit by way of the cutting device 7 and transporting cut components G1 to the drum 3 for fixing.

The cutting device 7 has a cutting blade (not shown) such as an ultrasonic cutter, for example, and cuts the rubber extruded component G transported by the first conveyor portion 6A into pieces with prescribed lengths (for example, a length required for fully winding each piece around the drum 3).

The first conveyor portion 6A can measure its transport distances and is controlled by a control means intermittently feeding the rubber component G by the prescribed length thereof each time. Accordingly, the cut components G1 each with the prescribed length are transported onto the second conveyor portion 6B.

The second conveyor portion 6B includes a conveyor body 12 supported in the upstream side thereof by a frame 11 freely rotatably about a pivotal point J. The conveyor body 12 is constituted of, for example, a belt conveyor and the top end of a rod of a cylinder 15 mounted on a side of the frame 11 is coupled with it. Therefore, by an extending or shrinking action of the rod, the conveyor body 12 is swinging about the pivotal point J upwards or downwards. With this swing action used, the conveyor body 12 can be moved between a lower position Q1 at which the distal end thereof is close to the forming drum 3 to fix the cut component G1 and an upper position Q2 at which the distal end thereof is apart from the folding drum 3 for waiting.

The feed means 4 includes sensors 13U and 13L detecting the upper limit value and lower limit value of the accumulation amount in the accumulator 5, and a control means 14 controlling rotation speed of a drive motor M (that is the rotation speed of a screw) of the extruder 2 based on a detection signal of the sensor 13U or 13L. Hence, the accumulation amount of the rubber extruded component in the accumulator 5 is restricted within a prescribed range.

The extruder 2 can desirably perform extruding, maintaining the correct sectional shape of the rubber extruded component G constant as its extruding rate is varied by the rotation control. Therefore, in this embodiment, by giving a function for adjusting an extruding speed to the die plate 20, the extruding speed V, as shown in Fig. 10B, are made uniform at positions along the width direction of the rubber extruded component G. The action of the extruding speed V to uniformity spreads a variation in a rubber extruding rate of the extruder, if any, uniformly across the entire component in the width direction. As a result, the profile of the speed distribution VP does not lose its necessary balance across the width. Hence, the sectional shape of the rubber extruded component is kept constant.

The extruder 2, as in Fig. 1, comprises an extrusion head 22 and a main body 23 feeding rubber into the extrusion head 22. A die plate 20 is mounted to the outlet of the extrusion head 22.

The main body 23 comprises a cylinder 25 having an extrusion screw 24 therein. The screw 24 is rotated by a drive motor M to extrude charged rubber from an extrusion outlet 25A (shown in Fig. 3) at the fore end of the cylinder while kneading it. For the drive motor M, a motor capable of being controlled in rotational speed is preferably adopted. In this example, an inverter motor is used and the rotational speed thereof is freely adjusted by inverter control of a control means 14.

As shown in Fig. 3, in the extrusion head 22, the die plate 20 is exchangeably mounted to the fore end of a head body 26 as a block fixed to the cylinder 25. In this example, a preferable embodiment is shown in which a preformer 27 to first form the rubber is disposed adjacent to the die plate 20 on the upstream side thereof.

The head body 26 has a guide flow path 29 guiding rubber from the cylinder 25 to the preformer 27. Furthermore, the preformer 27 has a receiving port 31i receiving rubber from the guide flow path 29, a sending port 31o feeding the rubber to the die plate 20 and an intermediate flow path 31 connecting the ports 31i and 31o therebetween. The die plate 20 has an inflow port 21i through which the rubber from the intermediate flow path 31 flows in, a discharge port 21o discharging the rubber, and a rubber flow path 21 connecting the ports 21i and 21o therebetween. In Figs. 4 and 5, the rubber flow path 21 and the intermediate flow path 31 are shown in respective exploded view, each divided into two parts, one on the other.

The discharge port 21o of the die plate 20 is formed with an opening shape adapted to its desired rubber extruded component G, similar to prior practice. As shown in Fig. 6, the die plate 20 has a flat shape with a lower section 32 having a smaller height and higher sections 33 each having a larger height. Thereby, the die plate 20 has a height Ho varying along the width direction. Such a die plate 20 can be used in extruding the rubber extruded component G, determined by the opening shape of the die plate 20, and having a thickness varying along the width direction.

The discharge port 21o comprises, in this example, the centre lower section 32A of an constant height substantially located in the central portion, higher sections 33 provided on both sides of the lower section 32A and inclined sections 34 located between the lower section 32A and the higher section 33. Moreover, the discharge port 21o has an end lower section 32B, at least one end E, having a triangular shape formed by gradually decreasing the height of the section toward the end E. In this example, the discharge port 21o is not all flat at the bottom edge, but has a bilaterally symmetrical shape with end lower sections 32B formed at both ends thereof.

On the other hand, in order to achieve an extruding speed V with uniformity, it is set that the inflow port 21i has a ratio (Ssi/Sso) of an area Sso per unit width in the lower section 32 at the discharge port 21o and an area Ssi at the inflow port 21i through which rubber flowing through the area Sso passes is larger than a ratio (Shi/Sho) of an area Sho per unit width in the higher section 33 at the discharge port 21o and an area Shi at the inflow port 21i through which rubber flowing through the area Sho passes. That is, the inflow port 21i is formed such that the following relation is satisfied:

$$(Ssi / Sso) > (Shi / Sho).$$

In addition, it is preferable that the value of the ratio (Ssi/Sso) is 1.0 or more. Note that as in this example, in a case where lower sections with a plurality of heights (for example, 2) 32A and 32B are present, that heights HsA and HsB satisfy in the following relation:

$$HsA > HsB,$$

the inflow port 21i is formed such that area ratios of the sections 32A and 32B, (SsiA/SsoA) and (SsiB/SsoB) satisfy the following relation, which is the inversion, in inequality, of the above case:

$$(SsiA / SsoA) < (SsiB / SsoB).$$

In such a way, an area at the inflow port 21i is designed relatively smaller in corresponding section to the higher section 33 with a large height Ho, through which rubber flows easily at the discharge port 21o. On the contrary, an area at the inflow port 21i is designed relatively larger in a corresponding section of the lower section 32 through which rubber is hard to flow at the discharge port 21o. Thereby, the extruding speed V of rubber (average speed of the rubber which passes the die plate 20) is put into balance, thereby making the extruding speed V uniform at positions along the width direction of the rubber extruded component G.

The inventors of the present invention performed an extrusion test as shown in Fig. 7A in conditions where the die plate 20 the height Ho at the discharge port 21o was constant, while the height Hi at the inflow port 21i was varied and the pressure was constant. In the test, extruding speeds, volumes of extruded components and thickness values of the extruded components were compared. Results of the test are shown in Fig. 7B. As seen from the figure, as the ratio (Hi/Ho) of a height of the inflow port 21i to that of the discharge port 21o or an area ratio (Si/So) increased, an extruding speed, a volume of an extruded component and a thickness of the extruded component all increased individually. However, the degree of variation in extruding speed greatly varied, while the degrees of variation in volume of the extruded component and in thickness of the extruded component were restricted to be small.

Therefore, by setting the area ratio (Shi/Sho) in the higher section 33 to a smaller value, while setting the area ratio (Ssi/Sso) in the lower section 32 to a larger value, uniformity in the extruding speed of rubber can be realised. Moreover, since variations in volume and thickness of an extruded component are very small, the discharge port 21o can be formed in conformity with a shape of a rubber extruded component G, similar to prior practice.

In the end lower section 32B, there is a tendency that rubber flow is especially difficult thereby reducing extruding speed. Accordingly, there arises a necessity for setting the area Ssi at the inflow port 21i to a larger value. For that reason, as shown in Fig. 6, for example, protruding sections 40 protruding outwardly in the width direction from the ends E of the discharge port 21o are formed at the inflow port 21i, correspondingly to the end lower section 32B. With this, the speed of rubber flow into the end lower section 32B in the vicinity of the inflow port 21i can be increased. Moreover, in this example, scooped parts 41 having a depth decreasing toward the end lower section 32B from the inflow port 21i are formed on the bottom surface of the rubber flow path 21 for the same purpose, thereby ensuring an area Ssi and realising smoothness of rubber flow.

Then, the intermediate flow path 31 of the preformer 27 exerts a function to realise a sufficient and smooth rubber flow into the protruding section 40 and the scooped section 41. The intermediate flow path 31 is formed substantially larger in size than the rubber flow path 21 of the die plate 20.

Fig. 8 shows a shape of an outlet 29o of the head body 26 (the guide flow path 29), shapes of the receiving port 31i and sending port 31o of the preformer 27 (the intermediate flow path 31) and shapes of the inflow port 21i and discharge port 21o of the die plate 20 (the rubber flow path 21) in the order in which rubber flows through the outlet and ports.

As shown in the figure, the shape of the sending port 31o of the preformer 27 is substantially the same as the outlet 29o of the head body 26. A width W0 of the sending port 31o and a width WG of the rubber extruded component G (shown in Fig. 10B) desirably satisfies the following relation:

$$WG(mm) + 20(mm) \leq W0\ (mm) \leq 3 \times WG(mm).$$

Moreover, the height T0 of the sending port 31o and a thickness TG of the rubber extruded component G (shown in Fig. 10B) desirably satisfies the following relation:

$$TG(mm) + 5(mm) \leq T0\ (mm) \leq 3 \times TG(mm).$$

The receiving port 31i of the preformer 27 is formed according to the shape of the discharge port 21o of the die plate 20. For example, in the case where the discharge port 21o has its lower section 32A in the centre portion and the higher sections 33 on both sides of the lower section 32A, and a height ratio (HsA/Hh) is 0.8 or less, the shape of the receiving port 31i is made close to the shape of the discharge port 21o. To be detailed, it is desirable to form a shape where height h is gradually increased from the centre portion towards both ends by reducing height in the centre section of the receiving port 31i. At this time, heights h0 (the maximum heights) at the both ends are best set so as be equal to height T0 at the sending port 31o.

Furthermore, as shown in Fig. 9, in a case where the discharge port 21o has the higher section 33 in the centre portion and the lower sections 32 on both sides thereof, and a height ratio (HsA/Hh) which is 1/1.5 or less, the shape of the receiving port 31i is made close to the shape of the discharge port 21o. At this time, it is desirable to form a shape where the height h is gradually increased from both ends towards the centre portion by reducing heights at both ends of the receiving port 31i. Furthermore, the maximum height h0 at the central portion is set so as be equal to the height T0 at the taking-out port 31o.

In cases other than where the discharge port 21o is in the above conditions, the shape of the receiving port 31i can be substantially the same as that of the sending port 31o (in this example, a rectangular shape). In other words, the function as the preformer 27 can be reduced to nothing. This is equal to non-use of the preformer 27.

In the above description, while detailed description is given of the especially preferred embodiment of the present invention, the present invention is not limited to a tread rubber, but can be adopted in extrusion of various other rubber extruded components each having a thickness varying along the width direction. Furthermore, the present invention can be carried out in embodiments in various ways of modification or alteration according to a shape of a moulded component.

As described above, according to the present invention, in a case where a rubber extruded component having a thickness varying along the width direction is extrusion-moulded, the extruding speed can be made uniform at positions in the width direction; therefore, the sectional shape of the rubber extruded component can be kept constant even if the rubber extruding rate of the extruding machine changes. Accordingly, for example, a production line in which the extruding machine is directly coupled with a tyre forming drum can be operated. Since such a production line can employ a small size extruding machine and is further operable without a temporary storage of the rubber extruded component, thereby enabling floor space to be saved and also improving productivity.

## Claims

**1.** A rubber extruding method for extruding a rubber extruded component comprising the step of discharging rubber from a discharge port (21o) of a die plate (20) mounted to an outlet of an extruder, wherein said die plate (20) has an inflow port (21i) through which rubber flows in from the extruder side and a rubber flow path (21) connecting said inflow port (21i) and said discharge port (21o) therebetween, said discharge port (21o) is of a flat shape with a first section (32) having a first height and a second section (33) having a second height larger than the first height such that the height (Ho) of the discharge port (21o) varies along its width direction to thereby extrude said rubber extruded component with a thickness varying along its width direction, **characterised in that** said die plate satisfies the following relation:

(Ssi / Sso) > (Shi / Sho),
wherein

Sso is an area per unit width in said first section (32) of the discharge port (21o),
Ssi is an area at said inflow port (21i) through which rubber flowing through said area Sso per unit width in said first section (32) passes,
Sho is an area per unit width in said second section (33) of the discharge port (21o) and
Shi is an area at said inflow port (21i) through which rubber flowing through said area Sho per unit width in said second section (33) passes,
and **in that** said first section (32) comprises an end section (32B) at least at one end (E) in a width direction, in a triangular shape formed by gradually decreasing its height toward said one end (E) and said inflow port (21i) has at least one protruding section (40) protruding outwardly in the width direction from the one end (E) of said discharge port.

**2.** A rubber extruding method according to claim 1, **characterised in that** the rubber flow path (21) has at least one scooped part (41) scooped out of a surface (32B) thereof lower than a bottom edge of said discharging port and said scooped part (41) has a depth decreasing toward said discharging port side from the inflow port side.

**3.** A rubber extruding method according to any of claims 1 to 2, **characterised in that** a preformer (27) is disposed adjacent to said die plate (20) on the upstream side thereof, said preformer (27) has a receiving port (31i) receiving rubber from said extruder, a sending port (31o) feeding the rubber into said inflow port (21i) of said die plate (20) and a component flow path (31) connecting said receiving port and said sending port therebetween, and the shape of said receiving port is close to the shape of said discharge port of said die plate.

**4.** A rubber extruding method according to any of claims 1 to 3, **characterised in that** said rubber extruded component is a tread rubber for a tyre.

**5.** A rubber extruding apparatus for extruding a rubber extruded component comprising a die plate (20) to be mounted to an outlet of an extruder and having a discharge port (21o) wherein said die plate (20) has an inflow port (21i) through which rubber flows in from the extruder side, and a rubber flow path (21) connecting said inflow port (21i) and said discharge port (21o) therebetween, said discharge port (21o) has a flat shape with a first section (32) having a first height and a second section (33) having a second height larger than the first height such that the height (Ho) of the discharge port (21o) varies along its width direction, **characterised in that** said die plate (20) satisfies the following relation:

$$(Ssi / Sso) > (Shi / Sho),$$

wherein Sso is an area per unit width in said first section (32) of the discharge port (21o), Ssi is an area at said inflow port (21i) through which rubber flowing through said area Sso per unit width in said first section (32) passes, Sho is an area per unit width in said second section (33) of the discharge port (21o) and Shi is an area at said inflow port (21i) through which rubber flowing through said area Sho per unit width in said second section (33) passes, and **in that** said first section (32) comprises an end section (32B) at least at one end (E) in a width direction, in a triangular shape formed by gradually decreasing its height toward said one end (E) and said inflow port (21i) has at least one protruding section (40) protruding outwardly in the width direction from the one end (E) of said discharge port.

**6.** A rubber extruding apparatus according to claim 5, **characterised in that** said rubber flow path (21) has at least one scooped part (41) scooped out of a surface (32B) thereof lower than a bottom edge of said discharging port and said scooped part (41) has a depth decreasing toward said discharging port side from the inflow port side.

**7.** A rubber extruding apparatus according to any of claims 5 or 6, **characterised in that** a preformer (27) is disposed adjacent to said die plate (20) on the upstream side thereof, said preformer (27) has a receiving port (31i) receiving rubber from said extruder, a sending port (31o) feeding the rubber into said inflow port (21i) of said die plate and an intermediate flow path (29) connecting said receiving port and said sending port therebetween, and the shape of said receiving port is close to the shape of said discharge port of said die plate.

**8.** A rubber extruding apparatus according to any of claims 5 to 7, **characterised by** a feed means feeding said rubber extruded component to a drum for making a raw tyre.

## Patentansprüche

1. Kautschukextrusionsverfahren zum Extrudieren einer aus Kautschuk extrudierten Komponente mit dem Schritt des Austragens von Kautschuk aus einer Austragsöffnung (21o) einer Düsenplatte (20), die an einem Auslass eines Extruders montiert ist, wobei die Düsenplatte (20) eine Einströmungsöffnung (21i), durch die Kautschuk von der Extruderseite her einströmt, und einen Kautschukströmungsweg (21) aufweist, der die Einströmungsöffnung (21i) und die Austragsöffnung (21o) dazwischen verbindet, wobei die Austragsöffnung (21o) eine flache Form mit einem ersten Teilstück (32) mit einer ersten Höhe und einem zweiten Teilstück (33) mit einer zweiten Höhe aufweist, die größer als die erste Höhe ist, sodass die Höhe (Ho) der Austragsöffnung (21o) entlang der Richtung ihrer Breite variiert, um dadurch die aus Kautschuk extrudierte Komponente mit einer Dicke zu extrudieren, die entlang der Richtung ihrer Breite variiert, **dadurch gekennzeichnet, dass** die Düsenplatte die folgende Relation erfüllt:

   (Ssi/Sso) > (Shi/Sho),
   wobei
   Sso eine Fläche pro Breiteneinheit in dem ersten Teilstück (32) der Austragsöffnung (21o) ist,
   Ssi eine Fläche an der Einströmungsöffnung (21i) ist, durch die Kautschuk, der durch die Fläche Sso pro Breiteneinheit in dem ersten Teilstück (32) strömt, hindurchtritt,
   Sho eine Fläche pro Breiteneinheit in dem zweiten Teilstück (33) der Austragsöffnung (21o) ist, und
   Shi eine Fläche an der Einströmungsöffnung (21i) ist, durch die Kautschuk, der durch die Fläche Sho pro Breiteneinheit in dem zweiten Teilstück (33) strömt, hindurchtritt,
   und dass das erste Teilstück (32) ein Endteilstück (32B) an zumindest einem Ende (E) in einer Richtung in der Breite in einer dreieckigen Form umfasst, die gebildet wird, indem dessen Höhe in Richtung des einen Endes (E) allmählich verringert wird, und die Einströmungsöffnung (21i) zumindest ein vorstehendes Teilstück (40) aufweist, das in der Richtung in der Breite von dem einen Ende (E) der Austragsöffnung aus nach außen vorsteht.

2. Kautschukextrusionsverfahren nach Anspruch 1,
   **dadurch gekennzeichnet, dass** der Kautschukströmungsweg (21) zumindest einen vertieften Teil (41) aufweist, der aus einer Oberfläche (32B) davon niedriger als ein unterer Rand der Austragsöffnung vertieft ist, und der vertiefte Teil (41) eine Tiefe aufweist, die in Richtung der Austragsöffnungsseite von der Einströmungsöffnungsseite aus abnimmt.

3. Kautschukextrusionsverfahren nach einem der Ansprüche 1 bis 2, **dadurch gekennzeichnet, dass** eine Vorformungseinrichtung (27) benachbart zu der Düsenplatte (20) auf einer stromaufwärtigen Seite davon angeordnet ist, wobei die Vorformungseinrichtung (27) eine Aufnahmeöffnung (31i), die Kautschuk aus dem Extruder aufnimmt, eine Beschickungsöffnung (31o), die den Kautschuk in die Einströmungsöffnung (21i) der Düsenplatte (20) zuführt, und einen Komponentenströmungsweg (31) aufweist, der die Aufnahmeöffnung und die Beschickungsöffnung dazwischen verbindet, und die Form der Aufnahmeöffnung nahe bei der Form der Austragsöffnung der Düsenplatte ist.

4. Kautschukextrusionsverfahren nach einem der Ansprüche 1 bis 3, **dadurch gekennzeichnet, dass** die aus Kautschuk extrudierte Komponente ein Laufflächenkautschuk für einen Reifen ist.

5. Kautschukextrusionsvorrichtung zum Extrudieren einer aus Kautschuk extrudierten Komponente mit einer Düsenplatte (20), die an einem Auslass eines Extruders zu montieren ist und eine Austragsöffnung (21o) aufweist, wobei die Düsenplatte (20) eine Einströmungsöffnung (21i), durch die Kautschuk von der Extruderseite her einströmt, und einen Kautschukströmungsweg (21) aufweist, der die Einströmungsöffnung (21i) und die Austragsöffnung (21o) dazwischen verbindet, wobei die Austragsöffnung (21o) eine flache Form mit einem ersten Teilstück (32) mit einer ersten Höhe und einem zweiten Teilstück (33) mit einer zweiten Höhe aufweist, die größer als die erste Höhe ist, sodass die Höhe (Ho) der Austragsöffnung (21o) entlang der Richtung ihrer Breite variiert, **dadurch gekennzeichnet, dass** die Düsenplatte (20) die folgende Relation erfüllt:

   $$(Ssi/Sso) > (Shi/Sho),$$

   wobei Sso eine Fläche pro Breiteneinheit in dem ersten Teilstück (32) der Austragsöffnung (21o) ist, Ssi eine Fläche an der Einströmungsöffnung (21i) ist, durch die Kautschuk, der durch die Fläche Sso pro Breiteneinheit in dem ersten Teilstück (32) strömt, hindurchtritt, Sho eine Fläche pro Breiteneinheit in dem zweiten Teilstück (33) der Austragsöffnung (21o) ist, und Shi eine Fläche an der Einströmungsöffnung (21i) ist, durch die Kautschuk, der durch die Fläche Sho pro Breiteneinheit in dem zweiten Teilstück (33) strömt, hindurchtritt, und dass das erste Teilstück (32) ein Endteilstück (32B) an zumindest einem Ende (E) in einer Richtung in der Breite in einer dreieckigen Form umfasst, die gebildet ist, indem seine Höhe in Richtung des einen Endes (E) allmählich abnimmt, und die Einströmungsöffnung (21i) zumindest ein vorstehendes Teilstück (40) aufweist, das in der Richtung in der Breite von dem einen Ende (E) der Austragsöffnung aus nach außen vorsteht.

6. Kautschukextrusionsvorrichtung nach Anspruch 5,
**dadurch gekennzeichnet, dass** der Kautschukströmungsweg (21) zumindest einen vertieften Teil (41) aufweist, der aus einer Oberfläche (32B) davon niedriger als ein unterer Rand der Austragsöffnung vertieft ist, und der vertiefte Teil (41) eine Tiefe aufweist, die in Richtung der Austragsöffnungsseite von der Einströmungsöffnungsseite aus abnimmt.

7. Kautschukextrusionsvorrichtung nach einem der Ansprüche 5 oder 6, **dadurch gekennzeichnet, dass** eine Vorformungseinrichtung (27) benachbart zu der Düsenplatte (20) an der stromaufwärtigen Seite davon angeordnet ist, wobei die Vorformungseinrichtung (27) eine Aufnahmeöffnung (31i), die Kautschuk von dem Extruder aufnimmt, eine Beschickungsöffnung (31o), die den Kautschuk in die Einströmungsöffnung (21i) der Düsenplatte zuführt, und einen dazwischen liegenden Strömungsweg (29) aufweist, der die Aufnahmeöffnung und die Beschickungsöffnung dazwischen verbindet, und die Form der Aufnahmeöffnung nahe bei der Form der Austragsöffnung der Düsenplatte ist.

8. Kautschukextrusionsvorrichtung nach einem der Ansprüche 5 bis 7, **gekennzeichnet durch** ein Zuführungsmittel, das die aus Kautschuk extrudierte Komponente einer Trommel zum Herstellen eines Rohreifens zuführt.

## Revendications

1. Procédé d'extrusion de caoutchouc pour extruder un composant extrudé en caoutchouc, comprenant l'étape consistant à décharger du caoutchouc depuis un orifice de décharge (21o) d'une plaque-matrice (20) montée sur une sortie d'une extrudeuse, dans lequel ladite plaque-matrice (20) comporte un orifice d'entrée (21i) à travers lequel s'écoule du caoutchouc provenant du côté extrudeuse et un trajet d'écoulement de caoutchouc (21) qui relie ledit orifice d'entrée (21i) et ledit orifice de décharge (21o) entre eux, ledit orifice de décharge (21o) a une forme aplatie avec une première section (32) ayant une première hauteur et une seconde section (33) ayant une seconde hauteur supérieure à la première hauteur, de telle sorte que la hauteur (Ho) de l'orifice de décharge (21o) varie le long de la direction de sa largeur, pour extruder ainsi ledit composant extrudé en caoutchouc avec une épaisseur qui varie le long de la direction de sa largeur, **caractérisé en ce que** ladite plaque-matrice satisfait la relation suivante :

$$(Ssi / Sso) > (Shi / Sho),$$

dans laquelle
Sso est une superficie par largeur unitaire dans ladite première section (32) de l'orifice de décharge (21o),
Ssi est une superficie au niveau dudit orifice d'entrée (21 i) à travers lequel passe le caoutchouc qui s'écoule à travers ladite superficie (Sso) par largeur unitaire dans ladite première section (32),
Sho est une superficie par largeur unitaire dans ladite seconde section (33) de l'orifice de décharge (21o), et
Shi est une superficie au niveau dudit orifice d'entrée (21i) à travers lequel passe le caoutchouc qui s'écoule à travers ladite superficie (Sho) par largeur unitaire dans ladite seconde section (33),
et **en ce que** ladite première section (32) comprend une section terminale (32B) à au moins une extrémité (E) dans une direction en largeur, dans une forme triangulaire formée en faisant progressivement diminuer sa hauteur en direction de ladite une extrémité (E), et ledit orifice d'entrée (21i) comprend au moins une section en projection (40) qui se projette vers l'extérieur dans la direction en largeur depuis ladite extrémité (E) dudit orifice de décharge.

2. Procédé d'extrusion de caoutchouc selon la revendication 1, **caractérisé en ce que** le trajet d'écoulement du caoutchouc (21) comprend au moins une partie en forme d'écope (41), taillée depuis une surface (32B) de celui-ci plus basse qu'un bord inférieur dudit orifice de décharge, et ladite partie en forme d'écope (41) a une profondeur qui diminue vers ledit côté de l'orifice de décharge depuis le côté de l'orifice d'entrée.

3. Procédé d'extrusion de caoutchouc selon l'une quelconque des revendications 1 et 2,

**caractérisé en ce qu'**un élément de préformage (27) est disposé adjacent à ladite plaque-matrice (20) sur le côté amont de celle-ci, ledit élément de préformage (27) comporte un orifice de réception (31 i) recevant du caoutchouc depuis ladite extrudeuse, un orifice émetteur (31o) qui alimente le caoutchouc dans ledit orifice d'entrée (21i) de ladite plaque-matrice (20) et un trajet d'écoulement de composant (31) qui relie ledit orifice récepteur et ledit orifice émetteur ensemble, et la forme dudit orifice récepteur est proche de la forme dudit orifice de décharge de ladite plaque-matrice.

**4.** Procédé d'extrusion de caoutchouc selon l'une quelconque des revendications 1 à 3,
**caractérisé en ce que** ledit composant extrudé en caoutchouc est un caoutchouc pour la bande de roulement d'un pneumatique.

**5.** Appareil d'extrusion de caoutchouc pour extruder un composant extrudé en caoutchouc, comprenant une plaque-matrice (20) à monter sur une sortie d'une extrudeuse et ayant un orifice de décharge (21o), dans lequel ladite plaque-matrice (20) comprend un orifice d'entrée (21i) à travers lequel du caoutchouc s'écoule en entrant depuis le côté extrudeuse, et un trajet d'écoulement de caoutchouc (21) qui relie ledit orifice d'entrée (21i) et ledit orifice de décharge (21o) entre eux, ledit orifice de décharge (21o) possède une forme aplatie avec une première section (31) ayant une première hauteur et une seconde section (33) ayant une seconde hauteur supérieure à la première hauteur, de telle façon que la hauteur (Ho) de l'orifice de décharge (21o) varie le long de la direction de sa largeur,
**caractérisé en ce que** ladite plaque-matrice (20) satisfait la relation suivante :

(Ssi / Sso) > (Shi / Sho),
dans laquelle
Sso est une superficie par largeur unitaire dans ladite première section (32) de l'orifice de décharge (21o),
Ssi est une superficie au niveau dudit orifice d'entrée (21 i) à travers lequel passe le caoutchouc qui s'écoule à travers ladite superficie (Sso) par largeur unitaire dans ladite première section (32),
Sho est une superficie par largeur unitaire dans ladite seconde section (33) de l'orifice de décharge (21o), et
Shi est une superficie au niveau dudit orifice d'entrée (21i) à travers lequel passe le caoutchouc qui s'écoule à travers ladite superficie (Sho) par largeur unitaire dans ladite seconde section (33),
et **en ce que** ladite première section (32) comprend une section terminale (32B) à au moins une extrémité (E) dans une direction en largeur, dans une forme triangulaire formée en faisant progressivement diminuer sa hauteur en direction de ladite une extrémité (E), et ledit orifice d'entrée (21i) comprend au moins une section en projection (40) qui se projette vers l'extérieur dans la direction en largeur depuis ladite extrémité (E) dudit orifice de décharge.

**6.** Appareil d'extrusion de caoutchouc selon la revendication 5, **caractérisé en ce que** ledit trajet d'écoulement de caoutchouc (21) comprend au moins une partie en forme d'écope (41), taillée depuis une surface (32B) de celui-ci plus basse qu'un bord inférieur dudit orifice de décharge, et ladite partie en forme d'écope (41) a une profondeur qui diminue vers ledit côté de l'orifice de décharge depuis le côté de l'orifice d'entrée.

**7.** Appareil d'extrusion de caoutchouc selon l'une quelconque des revendications 5 ou 6,
**caractérisé en ce qu'**un élément de préformage (27) est disposé adjacent à ladite plaque-matrice (20) sur le côté amont de celle-ci, ledit élément de préformage (27) comporte un orifice de réception (31i) recevant du caoutchouc depuis ladite extrudeuse, un orifice émetteur (31o) qui alimente le caoutchouc dans ledit orifice d'entrée (21i) de ladite plaque-matrice (20) et un trajet d'écoulement de composant (31) qui relie ledit orifice récepteur et ledit orifice émetteur ensemble, et la forme dudit orifice récepteur est proche de la forme dudit orifice de décharge de ladite plaque-matrice.

**8.** Appareil d'extrusion de caoutchouc selon l'une quelconque des revendications 5 à 7,
**caractérisé par** des moyens d'alimentation qui alimentent ledit composant extrudé en caoutchouc vers un tambour pour réaliser un pneumatique brut.

Fig.1

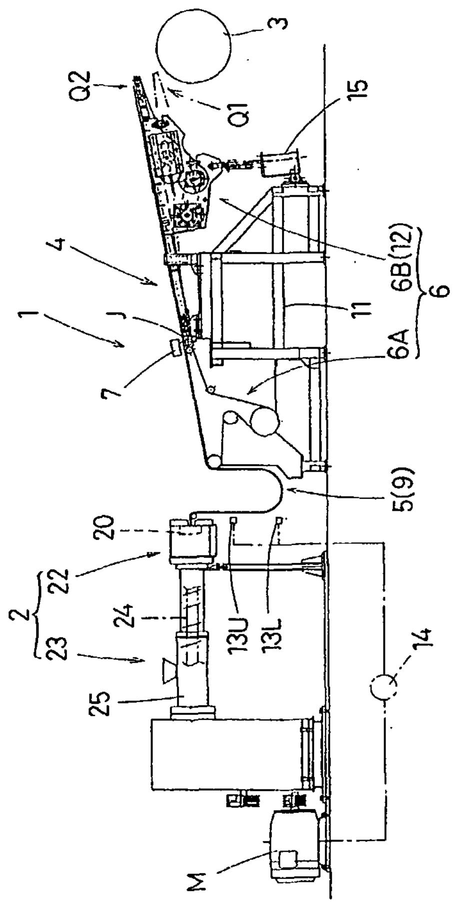

Fig.2(A)

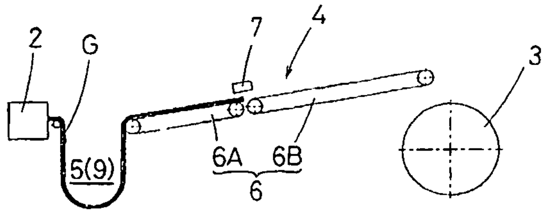


Fig.2(B)

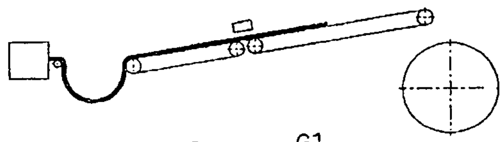

Fig.2(C)

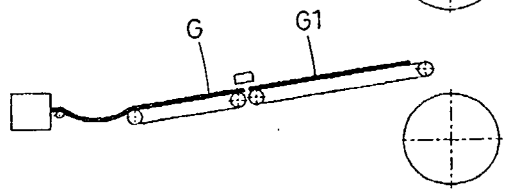


Fig.2(D)

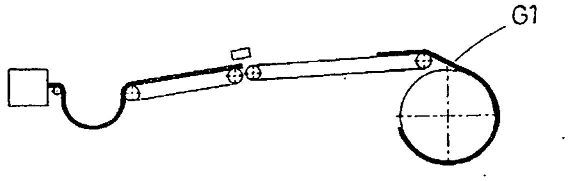


Fig.2(E)

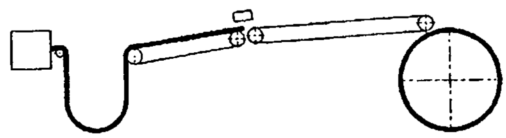

**Fig.3**

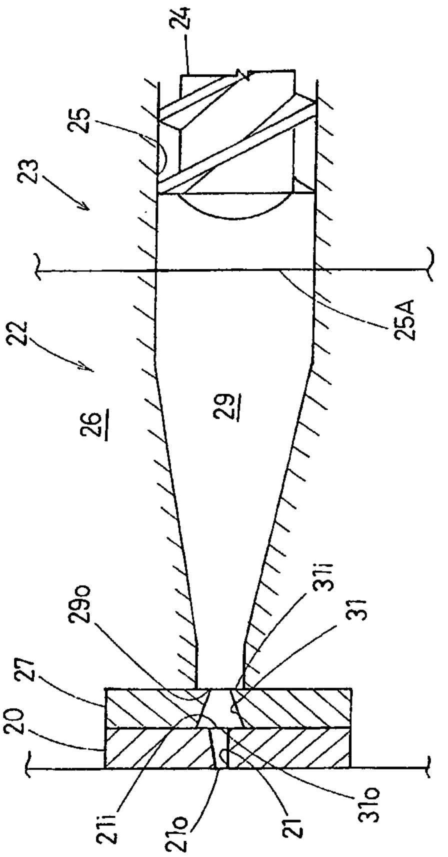

Fig.4

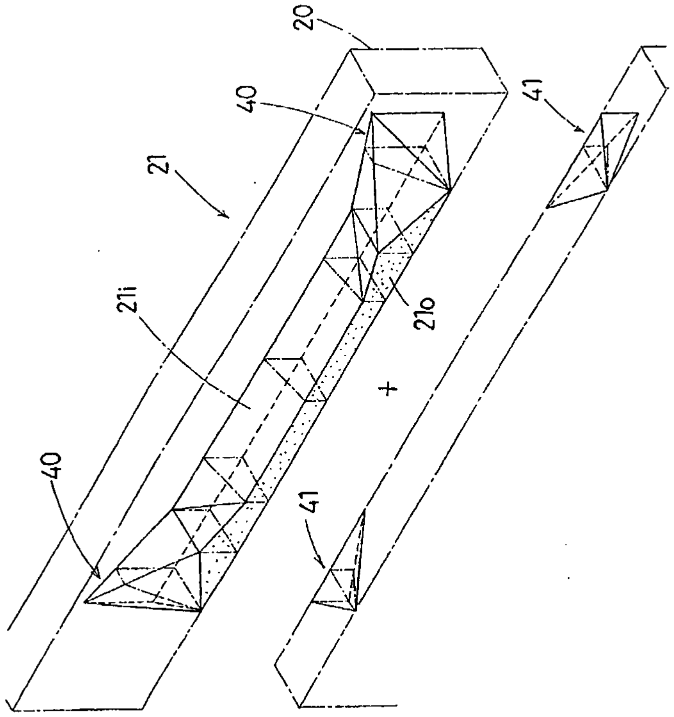

Fig.5

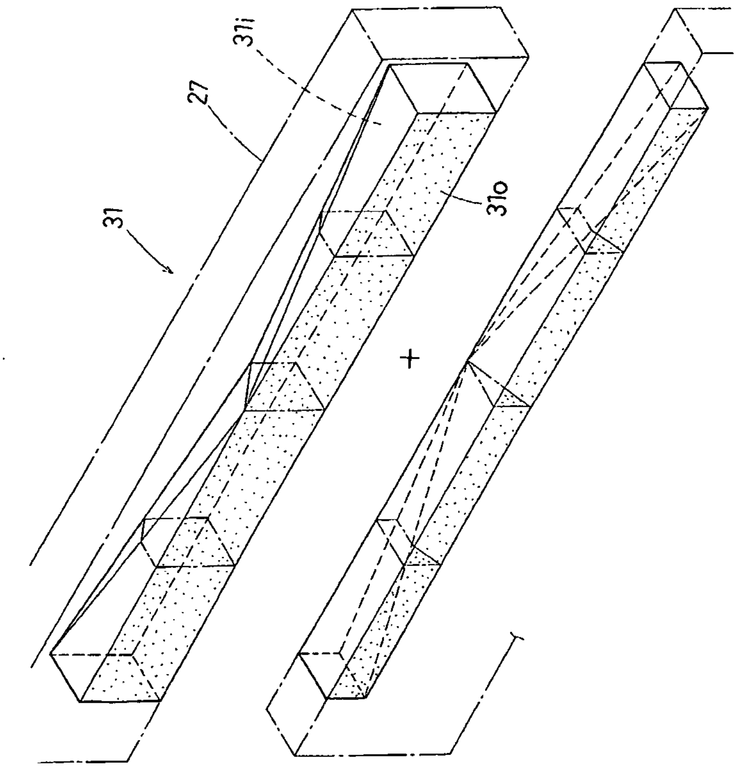

Fig.6

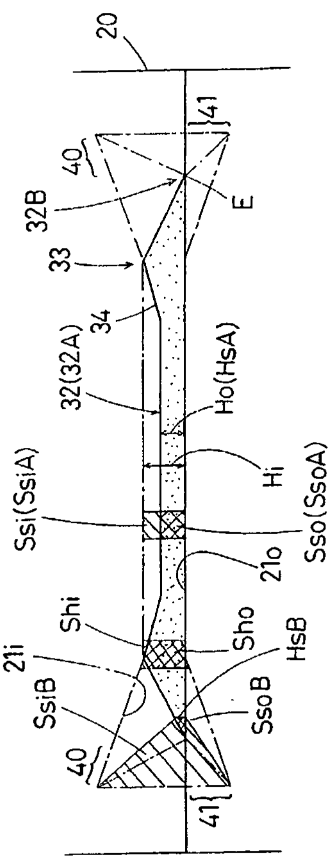
20
41
40
32B
E
33
34
32(32A)
Ho(HsA)
Hi
Ssi(SsiA)
Sso(SsoA)
21o
Shi
Sho
HsB
21i
SsiB
SsoB
40
41

## Fig.7(A)

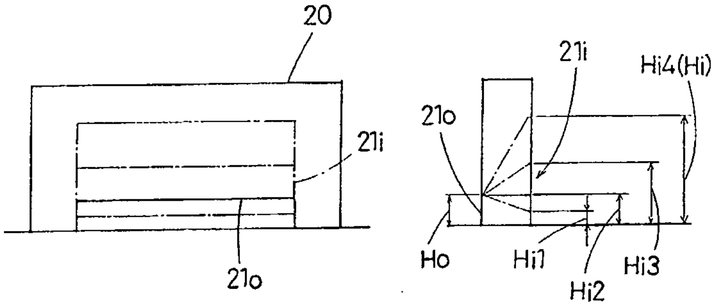
20
21i
21o
21i
Hi4(Hi)
21o
Ho
Hi1
Hi2
Hi3

## Fig.7(B)

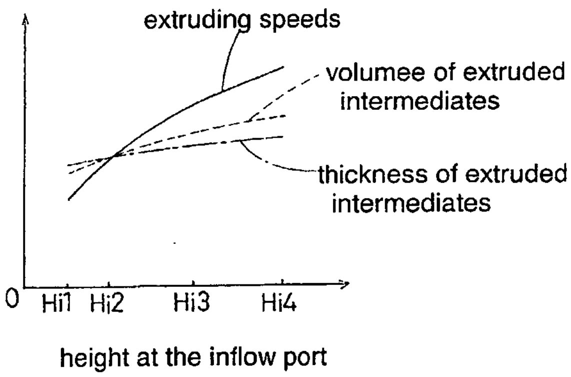
extruding speeds
volumee of extruded intermediates
thickness of extruded intermediates
0
Hi1
Hi2
Hi3
Hi4
height at the inflow port

Fig.8

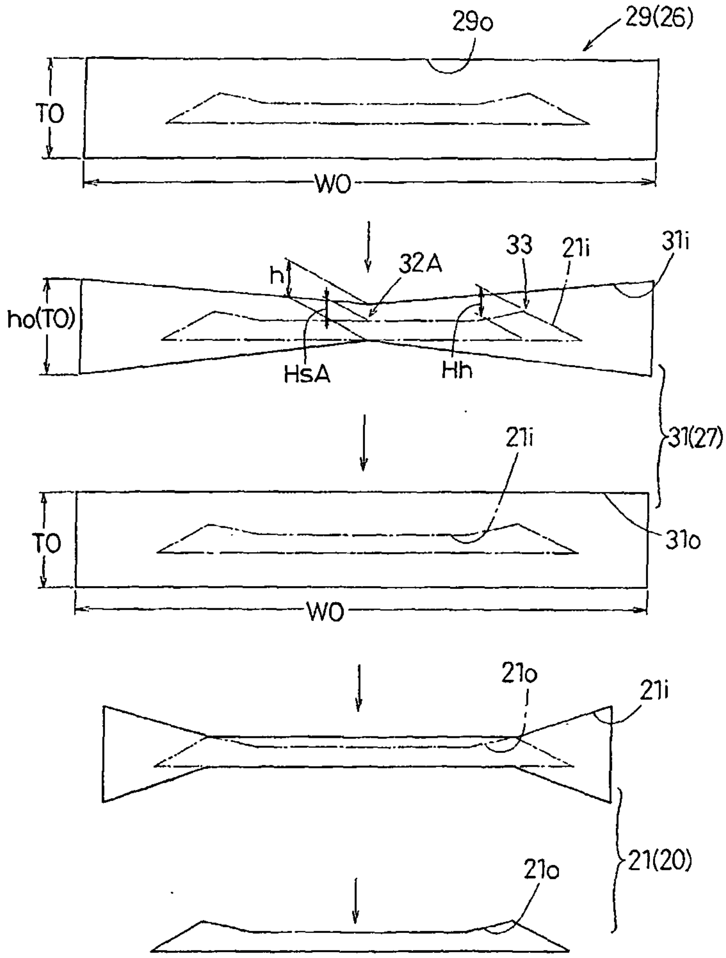
29o
29(26)
T0
W0
h
32A
33
21i
31i
h0(T0)
HsA
Hh
21i
31(27)
T0
31o
W0
21o
21i
21(20)
21o

Fig.9

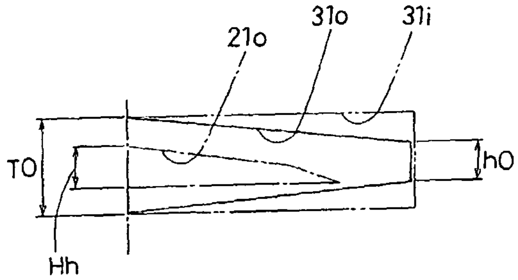

Fig.10(A)

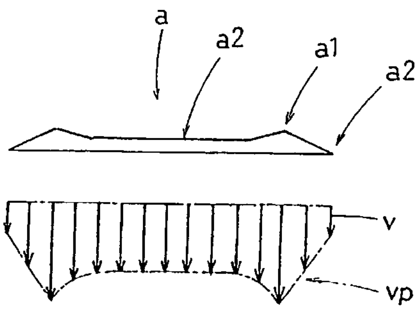


Fig.10(B)

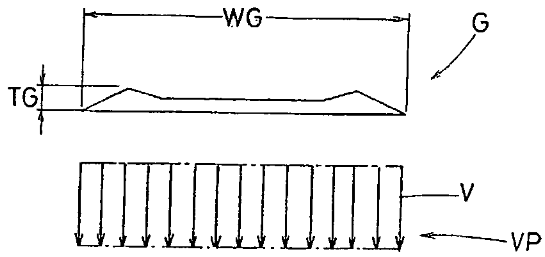

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2566854 A
- US 4515738 A
- US 4609336 A
- EP 733457 A
- US 4556382 A